# EUROPÄISCHE PATENTSCHRIFT

(11) **EP 0 701 702 B1**
(45) Veröffentlichungstag und Bekanntmachung des Hinweises auf die Patenterteilung: **05.02.1997**
(21) Anmeldenummer: 94916928.8
(22) Anmeldetag: 04.05.1994
(51) Int. Cl.: G01S 7/48

(54) **VORRICHTUNG ZUR DISTANZMESSUNG**
DEVICE FOR MEASURING DISTANCE
DISPOSITIF PERMETTANT DE MESURER DES DISTANCES

(30) Priorität: 15.05.1993 DE 4316348
(43) Veröffentlichungstag der Anmeldung: 20.03.1996
(60) Teilanmeldung: 95203130.0
(73) Patentinhaber: Leica AG, CH-9435 Heerbrugg (CH)
(72) Erfinder: EHBETS, Hartmut, CH-9432 Platz (CH); BERNHARD, Heinz, CH-9035 Grub (CH); GIGER, Kurt, CH-9464 Ruethi (CH); HINDERLING, Juerg, CH-9435 Heerbrugg (CH)
(74) Vertreter: Stamer, Harald, Dipl.-Phys.
(86) Internationale Anmeldenummer: EP9401412
(87) Internationale Veröffentlichungsnummer: WO9427164

(56) Entgegenhaltungen:
- EP-A- 0 401 692
- WO-A-93/07510
- DE-C- 4 002 356
- GB-A- 2 233 182

## Beschreibung

Die Erfindung betrifft eine Vorrichtung zur Distanzmessung mit den im Oberbegriff der Ansprüche 1 und 2 angegebenen Merkmalen.

Eine Vorrichtung dieser Art ist aus einer Veröffentlichung der Fa. Wild Heerbrugg AG, CH-9435 Heerbrugg, Schweiz, V.86, mit dem Titel "DISTOMAT Wild DI 3000, "Distanzmessung nach dem Laufzeitmeßverfahren mit geodätischer Genauigkeit" (Verfasser : K. Grimm, P. Frank, K. Giger) bekannt. Sie wird auch zur Messung von Distanzen zu Objekten mit natürlichen rauhen Oberflächen eingesetzt. So werden zur Vermessung von schwer zugänglichen Oberflächen, wie z.B. Steinbrüche, Kavernenwände, Tunnelprofile usw., bei denen Distanzen bis zu einigen 100 m gemessen werden müssen, Vorrichtungen verwendet, bei denen gepulste Infrarothalbleiterlaserdioden mit großen emittierenden Oberflächen als Strahlungsquellen dienen. Es werden Pulslängen von 12 nsec verwendet. Der Vorteil dieser Strahlungsquellen besteht darin, daß Strahlungspulse hoher Spitzenleistung in der Größenordnung von einigen Watt erzeugt werden können, so daß damit die geforderten Meßdistanzen von einigen 100 m erreicht werden. Die Genauigkeit beträgt 5-10 mm. Ein Nachteil ergibt sich aus den relativ großen Abmessungen der emittierenden Oberfläche dieser Laser in der Größenordnung von 300 µm, weil dadurch die Abstrahlungskeule dieser Vorrichtungen eine Divergenz von ca. 2 mrad aufweist, wodurch bei 50 m bereits ein Bündelquerschnitt von 0,1 m vorhanden ist. Bei sehr kurzer Distanz hat der Bündelquerschnitt dieser Vorrichtung immer noch einen Durchmesser von mehreren cm, weil man zur Aussendung der Pulsleistung von einigen Watt bei 2 mrad Bündeldivergenz Objektivdurchmesser von mehreren cm braucht.

Da Sende- und Empfangsobjektiv getrennt angeordnet sind, muß für den Nahbereich unter 10 bis 15 m zur Überdeckung von Sende- und Empfangsbündel eine Vorsatzlinse aufgesetzt werden. Ein weiterer Nachteil besteht darin, daß wegen der infraroten Meßstrahlung die aktuell angemessene Objektstelle nicht erkennbar ist. Um den Zielort sichtbar zu machen, wird ein zusätzlicher Laser mit sichtbarer Strahlungsemission vorgesehen, dessen Strahlachse zur Sendestrahlachse sorgfältig justiert werden muß. Das Gerät ist mit einer elektronischen Auswerte- und Anzeigevorrichtung ausgestattet, die es auch gestattet, über eine Tastatur zusätzliche Werte einzugeben und Berechnungen auszuführen.

Aus der DE 40 02 356 C1 ist ebenfalls ein Abstandsmeßgerät mit getrenntem Sende- und Empfangsobjektiv bekannt. Die Sendeeinrichtung enthält zwei elektronisch komplementär schaltbare Laserdioden, von denen eine die Lichtwellenzüge auf die Meßstrecke, die andere die Lichtwellenzüge auf die Referenzstrecke schickt. Beide Lichtwellenzüge werden vom gleichen Fotoempfänger abwechselnd empfangen, der an eine Auswerteelektronik angeschlossen ist. Es ist aus der Druckschrift nicht zu entnehmen, ob die Laserdioden sichtbares Licht emittieren. Der zu messende Abstandsbereich wird mit 2 bis 10 m angegeben und die Meßgenauigkeit soll im Bereich einiger mm liegen.

Aus EP 0 401 692 A2 ist ein optronischer Triangulations-Annäherungszünder bekannt, der für einen einfachen Endabgleich seines Zündabstandes ausgelegt ist. Dazu wird zunächst eine grobe mechanische Justierung von Sender und / oder Empfänger vorgenommen. Zu diesem Zweck wird ein Reflektor, der eine Zieloberfläche repräsentieren soll, jenseits der einzustellenden maximalen Zündentfernung positioniert. Die Grob-Ausrichtung von Sender und Empfänger erfolgt durch Verschieben von Sender und / oder Empfänger quer zum Strahlengang und / oder durch deren Verkippen. Wird dabei die Ansprechschwelle der Auslöseschaltung überschritten, also ein Zündsignal geliefert, werden Sender und Empfänger arretiert. Nach vollständigem Zusammenbau des Zünders wird der Reflektor auf den Nenn-Zündabstand herangeschoben, um eine Feinjustierung mittels einer Schraube von außen vorzunehmen. An der Schraube ist ein Abblendelement angebracht, das als Nadel ausgebildet sein kann und das seitlich in den Strahlengangvorzugsweise in den Empfangsstrahlengang vor der Empfangsoptik - durch Drehen der Schraube eingebracht wird. Dadurch wird die gesendete oder empfangene Lichtintensität so lange verändert, bis die Zündschwelle genau bei dem mit dem Reflektor eingestellten Nenn-Abstand überschritten und damit das Zündsignal im Nenn-Abstand ausgelöst wird. Es ist somit ein vereinfachter Schlußabgleich für die Justage des Ansprech-Abstandes realisiert, der eine durch beengte Raumverhältnisse im Zünder erschwerte mechanische Feinjustierung von Sender und Empfänger erübrigt.

Aus WO 93/07510 ist eine Methode bekannt, mit der die Funktion von Sender und Empfänger eines optischen Annäherungsmelders während seine Betriebs überprüft werden kann. In bestimmten Zeitintervallen wird ein Kontrollkreis eingeschaltet mit einem Kontrollempfänger, Kontrollsender und mit reflektierenden Oberflächen, die am Annäherungsmelder angebracht sind. Dabei wird das Licht des Senders auf den Kontrollempfänger reflektiert und das Licht des Kontrollsenders auf den Empfänger. Damit soll die Betriebssicherheit des Annäherungsmelders in automatisch gesteuerten Fahrzeugen oder Robotern gewährleistet werden.

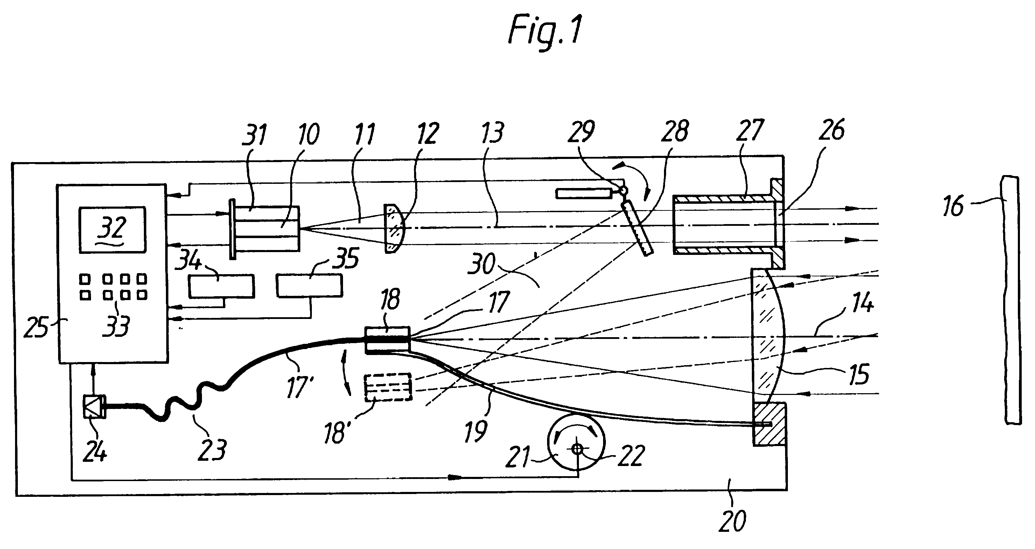

In der GB 2 233 182 A ist ein Entferungsmesser mit einer gepulsten Strahlungsquelle (Kohlendioxydlaser) und einem fotoleitenden Detektor angegeben. Der Detektor ist in einer Richtung quer zur einfallenden Strahlung ausgedehnt und besitzt an beiden Enden elektrische Kontakte. Über diese Kontakte wird der Detektor mit einem Konstantstrom beaufschlagt. Die vom Ziel reflektierte Strahlung wird von einem Objektiv auf den Detektor fokussiert, wobei der Fokusort auf dem Detektor quer zur optischen Achse der Vorrichtung von der Entfernung zum Ziel abhängig ist. An diesem Ort werden auf Grund der Fotoleitfähigkeit des Detektors Ladungen erzeugt, die um so länger die Leitfähigkeit des Detektors erhöhen, je weiter sie von dem elektrischen Kontakt entfernt sind, zu dem sie hinfließen (Pfeil 12 in Fig.1). Damit ist die zeitliche Länge des Stromsignals ein Maß für die Entfernung zum Ziel.

In der Zeitschrift "Industrie", 11/92, Seiten 6-8, B. Düllo : "Optischer Distanzsensor auf Basis der Lichtlaufzeitmessung" wird ein Entfernungs-Meßgerät DME 2000 der Fa. Sick GmbH mit optischer Distanzmessung auf Basis Laufzeitmessung beschrieben, das mit zwei sichtbares Licht emittierenden Halbleiterlaserdioden arbeitet. Das erforderliche Sendelicht erzeugt eine Laserdiode mit Kollimatoroptik, die zweite Laserdiode liefert das notwendige Referenzsignal direkt an den Empfänger. Das Sendestrahlenbündel und das Empfangsstrahlenbündel sind koaxial zueinander angeordnet, so daß nur ein einziges Objektiv mit relativ großem Durchmesser verwendet wird. Der Meßabstand zu natürlichen rauhen Oberflächen beträgt 0,1 bis 2 m mit einem Lichtfleckdurchmesser von ca. 3 mm. Für größere Objektentfernungen bis zu 130 m muß eine Reflektorfolie auf dem anzumessenden Objekt angebracht werden. Der Lichtfleckdurchmesser beträgt bei diesen Distanzen ca. 250 mm. In Verbindung mit der koaxialen Sende-Empfangsoptik wird als Empfänger eine relativ großflächige PIN-Fotodiode verwendet. Damit ist dann zwar eine Überlappung der stark divergenten Empfangslichtkeule mit dem Sendebündel gegeben, so daß Distanzen bis herab zu 0,1 m gemessen werden können, jedoch lassen sich mit diesen großflächigen Detektoren ohne zusätzliche Reflektoren keine großen Meßreichweiten erzielen.

Im Baugewerbe, insbesondere beim Innenausbau und im Installationsgewerbe besteht die Forderung, Distanzen bis zu 30 m auf rauhen Oberflächen ohne zusätzliche Präparation durch Reflektoren messen zu können. Bei einer geforderten Meßgenauigkeit von 1 bis 2 mm muß dazu die Divergenz des Empfangsbündels möglichst klein sein, da andernfalls der mit empfangene Umgebungslichtanteil ein zu großes Rauschsignal im Empfänger erzeugen würde. Eine kleine Divergenz des Empfangsbündels von ca. 2 mrad hat jedoch den Nachteil, daß bei getrennten Sende- und Empfangsoptiken eine Überlappung des Empfangsbündels mit dem Sendebündel erst ab 1 bis 2 m vorliegt, so daß ohne weitere Maßnahmen erst ab dieser Distanz eine Distanzmessung möglich ist.

Der Erfindung lag daher die Aufgabe zugrunde, mit einem stark kollimierten sichtbaren Meßstrahlenbündel, das im Nahbereich einen Durchmesser kleiner 0,5 cm und im entfernten Grenzbereich einen Durchmesser kleiner 1 bis 2 cm aufweist, eine Distanzmessung zu natürlichen rauhen Oberflächen im gesamten Distanzbereich von der Vorderkante des Meßgerätes bis zu mindestens 30 m zu ermöglichen. Die Genauigkeit der Messung soll dabei im Millimeterbereich liegen.

Diese Aufgabe wird bei einer Vorrichtung der eingangs genannten Art erfindungsgemäß durch die kennzeichnenden Merkmale der Ansprüche 1 oder 2 gelöst. Vorteilhafte Ausgestaltungen und Weiterbildungen der Vorrichtung ergeben sich aus den Merkmalen der Unteransprüche 3 bis 18.

Beim Erfindungsgegenstand erzeugt das Kollimatorobjektiv einen stark gebündelten Meßstrahl entlang seiner optischen Achse. Die optische Achse des daneben angeordneten Empfangsobjektivs verläuft zumindest nahezu parallel zu der optischen Achse des Kollimatorobjektivs und liegt mit dieser in einer gemeinsamen Ebene. Die nicht vermeidbare Divergenz des Meßstrahlenbündels, die relativ eng nebeneinander liegenden optischen Abbildungssysteme und die Brennweiten dieser Systeme bewirken, daß an Objekten bis etwa 2 m Nähe reflektierte Meßstrahlung nahezu im Brennpunkt des Empfangsobjektivs abgebildet wird. Durch die Konzentration des empfangenen Lichts in einer kleinen Fläche entstehen keine Intensitätsprobleme für die Signalauswertung bis hin zu den weiten Meßdistanzen.

Für kleine Meßdistanzen ist jedoch zu beobachten, daß sich die Abbildungsposition des am Objekt reflektierten Meßflecks zunehmend vom Brennpunkt längs und quer zur optischen Achse des Empfangsobjektivs entfernt. Die im Brennpunkt angeordnete Lichtleitereintrittsfläche erhält dann kein Licht mehr, wodurch die untere Meßgrenze erreicht wird. Erfindungsgemäß wird die Lichtleitereintrittsfläche in einer ersten Ausgestaltung der Verlagerung der Abbildungsposition des Meßflecks nachgeführt, und zwar lediglich quer zur optischen Achse des Empfangsobjektivs. Auf eine Nachführung längs der optischen Achse kann verzichtet werden, da Intensitätsprobleme hinsichtlich der an nahen Objekten reflektierten Meßstrahlung nicht bestehen. Es hat sich sogar herausgestellt, daß eine Nachführung in die korrekte Abbildungsposition zu einer Übersteuerung der Auswerteelektronik führt. Die steuerbar verschiebbare Lichtleitereintrittsfläche bietet für alle Meßdistanzen die Möglichkeit der Anpassung an optimale Signalpegel. Eine dazu alternative Lösung besteht darin, die Lichtleitereintrittsfläche feststehend anzuordnen und durch optische Umlenkmittel dafür zu sorgen, daß die bei kurzen Objektdistanzen zunehmend schräger in das Empfangsobjektiv einfallenden Meßstrahlen zur Lichtleitereintrittsfläche gelenkt werden. Auch hierbei wird die Erkenntnis ausgenutzt, daß es auf eine abbildungsoptisch korrekte Umlenkung nicht ankommt, da Intensitätsprobleme bei nahen Objektdistanzen nicht bestehen. Diese Lösung hat den Vorteil, daß sie ohne bewegte Elemente im Empfangskanal auskommt.

Ein die Meßgenauigkeit der erfindungsgemäßen Vorrichtung begrenzender Effekt ergibt sich aus den physikalischen Eigenschaften der modulierten Laserstrahlung im Zusammenwirken mit den anzumessenden rauhen Oberflächen.

Die sichtbare Strahlung der Halbleiterlaserdioden wird als Spektrum von äquidistanten Spektrallinien (Moden) abgestrahlt. Während der Einwirkung des Modulationsstromes ändern sich sowohl die Wellenlängen als auch die Strahldichten (Intensitäten) der Moden.Je nach Wellenlänge ergeben sich daher unterschiedliche Modulationsphasenverzögerungen des Laserpulses bezogen auf den elektrischen Modulationspuls. Die Modulationsphase bezieht sich dabei auf den zeitlichen Schwerpunkt tₛ der Intensitätsvariation I(t) über die Abstrahldauer t des Laserpulses während eines Modulationspulses. Mathematisch ist tₛ gleich dem Integral über I(t)*t*dt dividiert durch das Integral über I(t)*dt., wobei der Integrationsbereich gleich der gesamten Laserpulsdauer ist.

Je nach Modulationsart und Modulationspulsbreite können die je nach Wellenlänge variierenden Modulationsphasenunterschiede zeitlichen Laserpulsverzögerungen von bis zu 1,3 ns entsprechen. Die entsprechenden scheinbaren Distanzunterschiede gehen bis zu 200 mm.

Das von der anzumessenden rauhen Oberfläche zurückgestreute Licht hat wegen der Kohärenz der Laserstrahlung eine granulierte Intensitätsverteilung die unter der Bezeichnung Speckles bekannt ist. Nur in der Richtung, in die die Laserstrahlung reflektiert würde, wenn die rauhe Oberfläche ein Spiegel wäre, fallen die Speckles der verschiedenen Moden der Laserstrahlung zusammen. Wegen der unterschiedlichen Wellenlänge der Moden ist das für alle anderen Richtungen nicht der Fall, so daß ein Strahlungsfeld mit räumlich unterschiedlichen Modulationsphasen vorliegt.

Die Strahlung, die auf das Empfangsobjektiv fällt und dem Fotodetektor zugeführt wird, hat eine repräsentative Modulationsphase, die durch die mit der entsprechenden Intensität gewichtete Mittelung über alle Modulationsphasen des in das Objektiv einfallenden Strahlungsfeldes entsteht. Dieser Mittelwert schwankt je nach Specklesstruktur über das Strahlungsfeld, d.h. je nach Struktur der rauhen Oberfläche. Durch Verschieben eines Objektes mit makroskopisch gleichförmig erscheinender Oberfläche senkrecht zur Meßrichtung konnte nachgewiesen werden, daß der dieser Modulationsphasenschwankung entsprechende Distanzfehler bis zu 20 mm betragen kann.

Überraschenderweise hat sich herausgestellt, daß eine entscheidende Verbesserung der physikalischen Gegebenheit dadurch gelingt, daß die Modulation der Laserdioden mit Anregungspulsen erzeugt wird, deren Pulsbreite kleiner 2 ns beträgt. Dann werden die Modulationsphasenunterschiede je nach Wellenlänge so klein, daß die entsprechenden Distanzschwankungen kleiner 2 mm werden.

Die Verwendung von Lichtleitern in Distanzmeßgeräten ist an sich bekannt. Im Zusammenhang mit dem vorliegenden Erfindungsgegenstand ergibt sich der besondere Vorteil, daß der Lichtleiter in seinem Verlauf zum opto-elektronischen Wandler mehrfach gekrümmt werden kann. Dadurch wird die vorstehend beschriebene gewichtete Mittelung über alle Modulationsphasen zusätzlich unterstützt.

Zur Kompensation von Drifteffekten in der Elektronik und in den opto-elektronischen Wandlern ist es bekannt, daß vor und nach der externen Distanzmessung zum Vergleich über eine interne Referenzstrecke bekannter Länge gemessen wird. Zu diesem Zweck wird beim Erfindungsgegenstand ein lichtstreuendes Element in das kollimierte Meßstrahlenbündel so eingeschaltet, daß keine Strahlung über den externen Lichtweg gelangt. Die Streucharakteristik dieses Elementes wird dem Raumbereich angepaßt, in dem die Lichtleitereintrittsfläche verstellt wird. Dadurch werden zwei für die Funktion der Vorrichtung wesentliche Vorteile erzielt. Zum einen wird erreicht, daß von jedem Teil des Meßstrahlenbündels Strahlung in die Lichtleitereintrittsfläche gelangt, wodurch Unterschiede der Modulationsphase über den Querschnitt des Meßstrahlenbündels keinen Einfluß auf die Distanzmessung haben. Da von dem lichtstreuenden Element die Strahlung in den gesamten Raumbereich gestreut wird, in dem sich die Lichtleitereintrittsfläche bewegt, kann die Referenzmessung in jeder Position der Lichtleitereintrittsfläche sofort und ohne erneutes Einregeln der Position durchgeführt werden, wodurch eine kurze Meßzeit erreicht wird. Die Streuintensität pro Flächeneinheit kann so eingestellt werden, daß eine Übersteuerung der Auswerteeinrichtung sicher vermieden wird. Diese Maßnahme hat daher nicht nur für die Anordnung mit verstellbarer Lichtleitereintrittsfläche sondern in gleicher Weise Bedeutung für die alternative Anordnung mit feststehender Lichtleitereintrittsfläche und zusätzlichen Strahlenumlenkmitteln.

Die erfindungsgemäße Vorrichtung wird nachfolgend anhand von in der Zeichnung schematisch dargestellten Ausführungsbeispielen näher beschrieben, wobei auch auf weitere Vorteile eingegangen wird. Im einzelnen zeigen:
- Fig. 1: eine Gesamtdarstellung der Vorrichtung mit verstellbarer Lichtleitereintrittsfläche in Aufsicht,
- Fig. 2: einen Empfangsteil mit einem Spiegel zur Strahlumlenkung,
- Fig. 3: einen Empfangsteil mit refraktiver Strahlumlenkung,
- Fig. 4: einen Empfangsteil mit diffraktiver Strahlumlenkung,
- Fig. 5: einen in das Sendestrahlenbündel eingesetzten Strahlenteiler und
- Fig. 6: ein in das Sendestrahlenbündel einschaltbares Umlenkprisma.

In Fig.1 erzeugt ein Halbleiterlaser 10 ein sichtbares Meßstrahlenbündel 11, das durch ein Kollimatorobjektiv 12 in Richtung der optischen Achse 13 als Parallelstrahlenbündel ausgesendet wird und einen Durchmesser von etwa 4 mm hat. Die optische Achse 14 des Empfangsobjektivs 15 verläuft zumindest angenähert parallel zur optischen Achse 13 des Kollimatorobjektivs 12 und liegt mit dieser in einer Ebene. Der Durchmesser des Empfangsobjektivs 15 beträgt etwa 30 mm und der Aufnahmewinkel etwa 120°, so daß einerseits der Bündelquerschnitt für von weit entfernten Objekten 16 reflektierte Strahlungsintensitäten ausreichend groß ist und andererseits auch die von nahen Objekten unter großem Einfallswinkel reflektierte Strahlung aufgenommen werden kann.

Weit entfernte Objekte 16 scheinen für die Empfangsoptik 15 im Unendlichen zu liegen, so daß der Abbildungsort des am Objekt erzeugten Meßflecks auf der optischen Achse 14 im Brennpunkt des Empfangsobjektivs 15 liegt. Hier ist die Lichtleitereintrittsfläche 17 in ihrer Grundposition angeordnet. Das Lichtleiterende ist von einer Halterung 18 umfaßt, die an einer Blattfeder 19 befestigt ist. Das andere Ende der Blattfeder 19 ist am Gehäuse 20 der Distanzmeßvorrichtung starr eingespannt und bildet daher ein Federgelenk. Die Blattfeder 19 liegt unter Vorspannung an einem Exzenter 21 an, der motorisch um eine Achse 22 drehbar ist. Die Halterung 18 bewegt sich bei Drehung des Exzenters 21 z.B. in die Position 18' quer zur optischen Achse 14. Der Verstellweg beträgt in einem praktischen Ausführungsbeispiel etwa 3 mm. In der Position 18' wird Strahlung von einem nahen Objekt empfangen, was durch das gestrichelt eingezeichnete Empfangsstrahlenbündel angedeutet ist. Die Verstellung der Lichtleitereintrittsfläche verläuft in etwa in der Brennebene des Empfangsobjektivs 15. Die korrekte Abbildungsposition des nahen Meßflecks liegt ersichtlich in Lichtrichtung hinter der Brennebene.

Anstelle der im Ausführungsbeispiel gewählten Verstellvorrichtung mit Federgelenk und Exzenter sind andere konstruktive Ausgestaltungen möglich, wie z.B. Schlitten-. oder Mehrgelenk-Elemente.

Der Lichtleiter 17'ist in seinem vorderen Abschnitt frei beweglich, so daß er der Verstellung der Halterung 18 folgen kann. In seinem hinteren Abschnitt 23 ist er mehrfach gekrümmt fixiert. An seinem Ende ist der Lichtleiteraustrittsfläche ein opto-elektronischer Wandler 24 nachgeschaltet. Die Empfangssignale werden einer Auswerteeinrichtung 25 zugeführt.

Im Bereich des aus dem Gehäuse 20 der Vorrichtung austretenden Meßstrahlenbündes 11 ist eine reflexarm verspiegelte Abschlußscheibe 26 eingesetzt, die zur Unterdrückung von Reflexen auch schräg zum Strahl gestellt sein kann. Um zu vermeiden, daß Reststreuungen zur Lichtleitereintrittsfläche 17 gelangen, ist außerdem eine rohrförmige Blende 27 vorgesehen. Vor der Lichteintrittsöffnung dieser Blende 27 ist eine schaltbare Strahlenumlenkeinrichtung 28 angeordnet, die um eine Achse 29 motorisch schwenkbar ist. Die vom Meßstrahlenbündel 11 beaufschlagte Oberfläche der Strahlenumlenkeinrichtung 28 ist streuend, wobei ein divergenter Streukegel 30 erzeugt wird. Die Öffnung des Streukegels 30 im Bereich der Lichtleitereintrittsfläche 17 ist so groß, daß in allen Positionen Strahlung aus dem so erzeugten Referenzlichtweg empfangen wird.

Die Auswerteeinrichtung 25 enthält auch die Elektronik zur Modulation des Halbleiterlasers 10. Zur Justierung der Abstrahlrichtung des Halbleiterlasers 10 auf die optische Achse 13 des Kollimatorobjektivs 12 kann das Gehäuse des Halbleiterlasers 10 um eine Achse 31 oder eine dazu senkrecht stehende Achse schwenkbar gelagert sein. Die Justierung kann in Abhängigkeit von einem ausgewählten Empfangssignal motorisch über die Auswerteeinrichtung 25 gesteuert werden. Zum Ausgleich von geringen Fehljustierungen der optischen Achsen 13, 14 zu einer gemeinsamen Ebene kann es auch vorteilhaft sein, die Lichtleitereintrittsfläche nicht nur in der Ebene der optischen Achsen 13, 14, sondern auch senkrecht dazu zu verstellen. Durch eine geeignete Abtastbewegung in der Brennebene des Empfangsobjektivs 15 kann der Ort mit einem optimalen Signalpegel ermittelt werden und in dieser Lage der Lichtleitereintrittsfläche 17 die Signalauswertung vorgenommen werden.

Die Auswerteeinrichtung 25 enthält eine Anzeigevorrichtung 32 und eine Tastatur 33, über die z.B. Korrekturwerte oder ergänzende Informationen zur aktuellen Distanzmessung eingegeben werden können. Eine wichtige ergänzende Information ist die Berücksichtigung der Horizontallage bzw. Vertikallage der durch die beiden optischen Achsen 13, 14 definierten Ebene, um tatsächlich senkrecht zum Objekt messen zu können. Dazu kann der Vorrichtung z.B. ein zweiachsiger elektronischer Neigungsmesser 34 zugeordnet sein, dessen Horizontalachsen in der Ebene der optischen Achsen 13, 14 liegen und parallel und senkrecht zu diesen Achsen ausgerichtet sind.

Die Ausgangssignale des Neigungsmessers 34 können der Auswerteeinrichtung 25 zugeführt und bei der Distanzmessung automatisch berücksichtigt werden. Sie können aber auch zur mechanischen Verstellung des Halbleiterlasers 10 oder eines nicht dargestellten ativen optischen Elementes im Sendestrahlengang verwendet werden, um das kollimierte Strahlenbündel automatisch zu horizontieren.

Neben einer Information über die Neigung der Vorrichtung im Raum erweitert die Berücksichtigung des Azimuts, d.h. des Winkels, unter dem das Meßstrahlenbündel in der Horizontalebene auf die angemessene Objektfläche auftrifft, die Möglichkeiten der Distanzmessung, und zwar in Form einer polaren Aufnahme der Meßwerte. Dazu kann der Vorrichtung ein digital-magnetischer Kompaß 35 zugeordnet sein, dessen Azimutreferenzrichtung parallel zur optischen Achse 13 des Kollimatorobjektivs 12 ausgerichtet ist. Mehrere Distanzmessungen mit Berücksichtigung der Neigung und des Azimuts des Meßstrahlenbündels erlauben in an sich bekannter Weise die Bestimmung von Punkten und Flächen im Raum und auch die Bestimmung der Lage von Flächen zueinander von einem einzigen Meßstandort aus. Ebenso ist die rechnerische Ermittlung von Horizontaldistanzen möglich, wie sie sonst nur bei Meßsystemen mit mechanischen Achsen, elektronischen Tachymetern, möglich ist.

Als Nullpunkt der Messung können die Vorderfläche, die Rückfläche oder auch die Mitte des Gehäuses 20 der Vorrichtung definiert und wahlweise z.B. über die Tastatur 33 in die Auswerteeinrichtung 25 eingegeben sowie von ihr automatisch bei der Distanzmessung berücksichtigt werden.

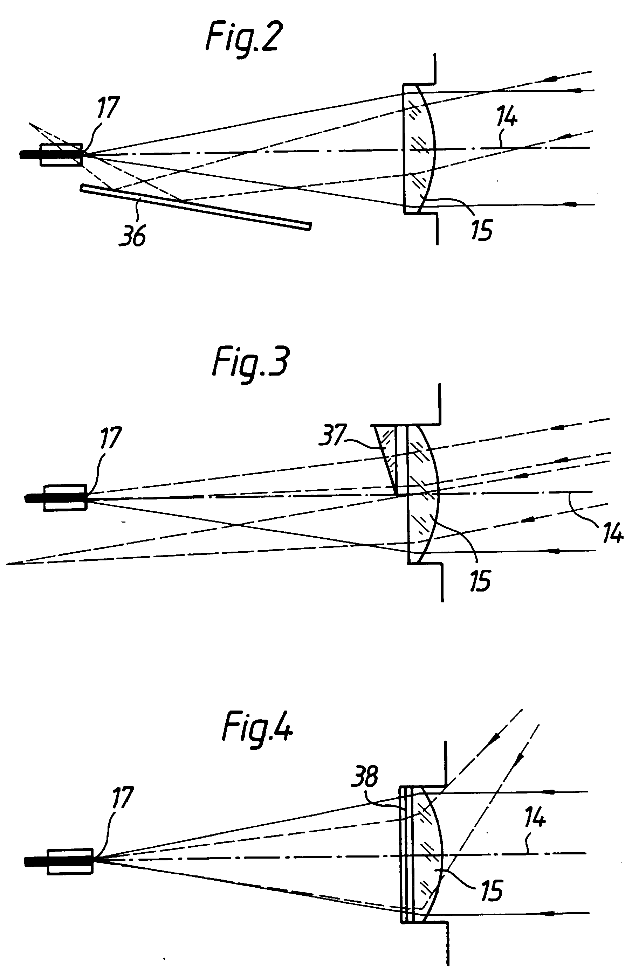

Fig.2 zeigt eine erste Lösungsmöglichkeit zur Umlenkung der von nahen Objektflächen reflektierten Strahlenbündel in Richtung auf eine feststehende Lichtleitereintrittsfläche 17. Dazu dient hier ein außerhalb der optischen Achse 14 und schräg zu ihr angeordneter ebener Spiegel 36, der aber auch leicht gekrümmt und streuend sein kann. Die zweckmäßige Form, Anordnung und Ausgestaltung können durch Versuche, die im Rahmen fachmännischen Handelns liegen, leicht bestimmt werden. Zum Ausgleich von evtl. vorhandenen Schieflagen zwischen den optischen Achsen 13, 14 kann es insbesondere sinnvoll sein, den Spiegel torusförmig um die optische Achse 14 herum auszubilden. Die beschriebene Anordnung hat den Vorteil, daß die von entfernten Objekten empfangene Strahlung durch das Umlenkmittel nicht beeinflußt wird.

In Fig.3 ist als weitere Möglichkeit zur Umlenkung der schräg einfallenden Meßstrahlen ein Prisma 37 als refraktives Element vorgesehen. Auch hier kann durch Versuche die zweckmäßigste Anordnung des Prismas 37 ermittelt werden, in der einerseits die von entfernten Objekten empfangene Strahlung nicht soweit abgelenkt wird, daß Intensitätsschwierigkeiten auftreten und andererseits ein ausreichender Anteil der schräg einfallenden Meßstrahlen in Richtung auf die Lichtleitereintrittsfläche 17 gelenkt wird. Insbesondere kann es vorteilhaft sein, die refraktive Fläche ringsymmetrisch zur optischen Achse 14 anzuordnen und im Zentrum einen Teil unbeeinflußt zu lassen. Das Prisma 37 kann auch schaltbar sein, so daß es nur bei nahen Objektdistanzen wirksam wird.

Fig.4 zeigt eine weitere Möglichkeit der richtungsabhängigen Strahlenumlenkung mit Hilfe eines diffraktiven Elementes 38. Solche Elemente gewinnen durch Weiterentwicklung der Mikrostrukturtechnik für holographische Elemente, Zonenplatten und binäre Optiken zunehmend an Bedeutung. Eine Übersicht über die Gestaltung und Anwendung solcher Elemente kann einer Publikation des Centre Suisse d'Electronique et de Microtechnique S.A., Maladière 71, CH-2007 Neuchâtel, Schweiz über "Diffractive Optical Elements (DOE) - Design, development and application assistance", "Diffractive Optical Element - Technologies", "Holographic Optical Elements (HOE)" und "Computer generated Holograms (CGH)", 8 Seiten, Juni 1991, entnommen werden. Der Vorteil dieser Elemente liegt darin, daß die diffraktive Struktur individuellen Abbildungseigenschaften angepaßt werden kann. Dabei können auch komplizierte optische Transformationsfunktionen relativ einfach realisiert werden. Insbesondere kann eine Beugungsstruktur berechnet und fotolithografisch erzeugt werden, die aus unterschiedlichen Richtungen einfallende Strahlen in dieselbe Richtung lenken. Der Aufnahmewinkel des Objektivs 15 in Richtung des Sendestrahls kann damit wesentlich vergrößert werden.

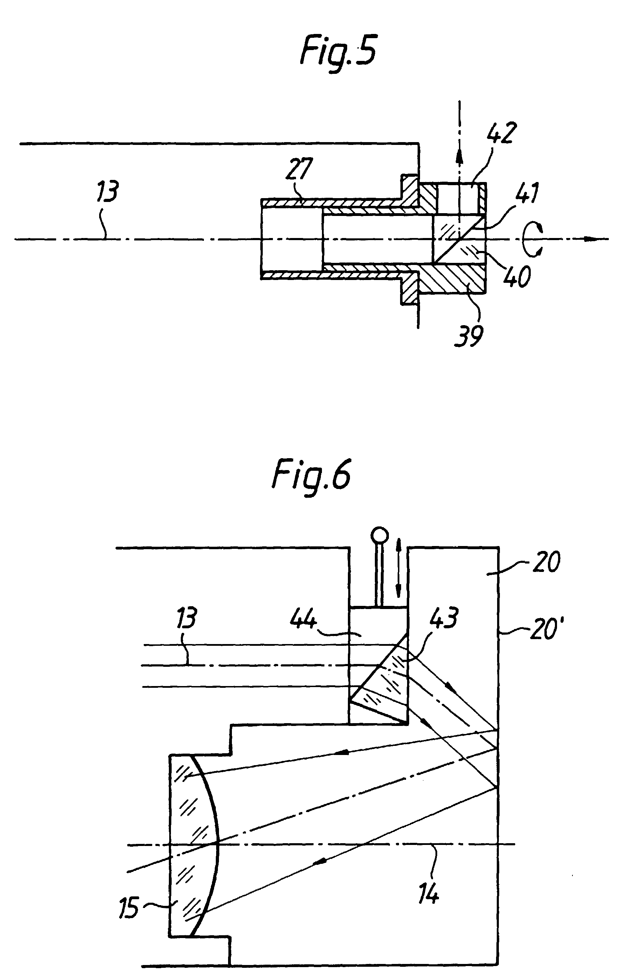

Eine Erweiterung des Anwendungsbereichs der erfindungsgemäßen Vorrichtung ergibt sich durch den Einsatz eines drehbaren Zweistrahlprismas in das austretende kollimierte Meßstrahlenbündel. Wie in Fig.5 dargestellt, kann dazu die Abschlußscheibe 26 entfernt und an ihrer Stelle ein Tubus 39 in die rohrförmige Blende 27 eingesetzt werden. In den Tubus 39 ist ein Prisma 40 mit strahlteilender Kittfläche 41 eingesetzt. Durch eine Öffnung 42 im Tubus 39 kann auf diese Weise ein zusätzlicher sichtbarer Strahl senkrecht zur optischen Achse 13 des Meßstrahlenbündels erzeugt werden. Dieser Strahl kann z.B. dazu verwendet werden, ihn an eine vorhandene Fläche anzulegen, um Abstände senkrecht zu dieser Fläche messen zu können. Bei senkrecht zum Meßobjekt ausgerichteter Vorrichtung können mit dem zusätzlichen Strahl auch Abstandswerte auf andere Flächen übertragen werden.

Der in Fig. 5 dargestellte Vorsatz zur Erzeugung eines Orientierungsstrahles senkrecht zum Meßstrahl kann in an sich bekannter Weise auch durch Prismen mit mehreren Teilerflächen oder anderer Strahlenumlenkung, wie z.B. bei einem Pentaprisma, abgeändert werden.

Eine weitere Aufgabe des Vorsatzes kann darin bestehen, die optische Achse 13 des Meßstrahles in Richtung auf die optische Achse 14 des Empfangsobjektivs 15 umzulenken. Eine solche Ausgestaltung ist in Fig. 6 dargestellt. Sie hat den Vorteil, daß sogar an der Vorderkante 20' des Gehäuses 20 anliegende Objekte Strahlung in den Empfangsstrahlengang reflektieren. Aus konstruktiven Gründen der Halterung des Objektivs 15 ist es in diesem Fall vorteilhaft, das Empfangsobjektiv 15 etwas in das Gehäuse 20 hinein zu verlegen. Das zur Umlenkung der Strahlen vorgesehene Prisma 43 ist auf einem Schieber 44 angeordnet, der bei Messung von sehr kurzen Entfernungen von Hand in den Strahlengang eingeschoben werden kann.

Der Aufwand an Funktionselementen für die erfindungsgemäße Vorrichtung ist gering und diese eignen sich für eine Miniaturisierung. Die Vorrichtung kann daher sehr kompakt und insbesondere als Taschengerät ausgestaltet werden.

## Patentansprüche

1. Vorrichtung zur Distanzmessung mit
- einem von einem Halbleiterlaser (10) erzeugten sichtbaren Meßstrahlenbündel (11),
- einem Kollimatorobjektiv (12) zur Kollimation des Meßstrahlenbündels (11) in Richtung der optischen Achse (13) des Kollimatorobjektivs (12),
- einer Schaltungsanordnung zur Modulation der Meßstrahlung,
- einem Empfangsobjektiv (15) zur Aufnahme und Abbildung des an einem entfernten Objekt (16) reflektierten Meßstrahlenbündels (11) auf eine Empfangseinrichtung,
- einer schaltbaren Strahlumlenkeinrichtung (28) zur Erzeugung einer internen Referenzstrecke zwischen dem Halbleiterlaser (10) und der Empfangseinrichtung und
- einer elektronischen Auswerteeinrichtung (25) zur Ermittlung und Anzeige der zum Objekt (16) gemessenen Distanz, **dadurch gekennzeichnet**, daß die Empfangseinrichtung einen Lichtleiter (17') mit nachgeschaltetem opto-elektronischem Wandler (24) enthält, wobei die Lichtleitereintrittsfläche (17) in der Abbildungsebene des Empfangsobjektivs (15) für große Objektentfernungen angeordnet und aus dieser Position (18) quer zur ptischen Achse (14) des Empfangsobjektivs (15) steuerbar verschiebbar ist.

2. Vorrichtung zur Distanzmessung mit
- einem von einem Halbleiterlaser (10) erzeugten sichtbaren Meßstrahlenbündel (11),
- einem Kollimatorobjektiv (12) zur Kollimation des Meßstrahlenbündels (11) in Richtung der optischen Achse (13) des Kollimatorobjektivs (12),
- einer Schaltungsanordnung zur Modulation der Meßstrahlung,
- einem Empfangsobjektiv (15) zur Aufnahme und Abbildung des an einem entfernten Objekt (16) reflektierten Meßstrahlenbündels (11) auf eine Empfangseinrichtung,
- einer schaltbaren Strahlumlenkeinrichtung (28) zur Erzeugung einer internen Referenzstrecke zwischen dem Halbleiterlaser (10) und der Empfangseinrichtung und
- einer elektronischen Auswerteeinrichtung (25) zur Ermittlung und Anzeiger der zum Objekt (16) gemessenen Distanz, **dadurch gekennzeichnet**, daß die Empfangseinrichtung einen Lichtleiter (17') mit nachgeschaltetem opto-elektronischen Wandler (24) enthält, wobei die Lichtleitereintrittsfläche (17) auf der optischen Achse (14) des Empfangsobjektivs (15) in der Abbildungsebene für große Objektdistanzen angeordnet ist und zwischen dem Empfangsobjektiv (15) und der Lichtleitereintrittsfläche (17) außerhalb der optischen Achse (14) des Empfangsobjektivs (15) optische Mittel (36; 37; 38) vorgesehen sind, die bei kürzeren Objektdistanzen die Abbildungsposition des Meßstrahlenbündels (11) zur optischen Achse (14) des Empfangsobjektivs (15) umlenken.

3. Vorrichtung nach Anspruch 1 oder 2, **dadurch gekennzeichnet**, daß die Meßstrahlung pulsmoduliert ist mit Anregungspulsen einer Pulsbreite unterhalb von zwei Nanosekunden.

4. Vorrichtung nach Anspruch 1 oder 2, **dadurch gekennzeichnet**, daß der Lichtleiter (17') in seinem Verlauf mehrfach gekrümmt (23) ist.

5. Vorrichtung nach Anspruch 1, **dadurch gekennzeichnet**, daß das Lichteintrittsende (17) des Lichtleiters (17') von einer mechanischen Verstellvorrichtung (18, 19, 21, 22) gehalten wird, die in einer Ebene verstellbar ist, die durch die optischen Achsen (13, 14) des Kollimatorobjektivs (12) und Empfangsobjektivs (15) definiert ist.

6. Vorrichtung nach Anspruch 5, **dadurch gekennzeichnet**, daß die Verstellvorrichtung zusätzlich senkrecht zu der durch die optischen Achsen (13, 14) definierten Ebene verstellbar ist.

7. Vorrichtung nach den Ansprüchen 5 oder 6, **dadurch gekennzeichnet**, daß ein motorischer Antrieb mit Steuereinrichtung vorgesehen ist, die die Verstellvorrichtung aus der Grundposition (18) über den vorgegebenen Verstellbereich (18') bewegt, wobei die aufgenommene Lichtintensität gemessen und gespeichert wird und danach die Verstellvorrichtung in eine Position gebracht wird, in der eine für die Signalauswertung optimale Lichtintensität empfangen wird.

8. Vorrichtung nach Anspruch 7, **dadurch gekennzeichnet**, daß die Verstellvorrichtung aus einem Federgelenk (19) mit motorisch angetriebenem Exzenter (21, 22) besteht.

9. Vorrichtung nach einem der vorhergehenden Ansprüche, **dadurch gekennzeichnet**, daß als schaltbare Strahlumlenkeinrichtung für die Erzeugung der Referenzstrecke ein lichtstreuendes Element (28) vorgesehen ist, dessen Streucharakteristik (30) dem Verstellbereich (18, 18') der Lichtleitereintrittsfläche (17) angepaßt ist.

10. Vorrichtung nach Anspruch 2, **dadurch gekennzeichnet**, daß zur Umlenkung der Abbildungsposition ein geneigt zur optischen Achse (14) des Empfangsobjektivs (15) ausgerichteter Reflektor (36) vorgesehen ist.

11. Vorrichtung nach Anspruch 2, **dadurch gekennzeichnet**, daß zur Umlenkung der Abbildungsposition ein in Randbereichen des Empfangsobjektivs (15) angeordnetes refraktives optisches Element (37) vorgesehen ist.

12. Vorrichtung nach Anspruch 2, **dadurch gekennzeichnet**, daß zur Umlenkung der Abbildungsposition dem Empfangsobjektiv (15) ein diffraktives optisches Element (38) zugeordnet ist.

13. Vorrichtung nach einem der vorhergehenden Ansprüche, **gekennzeichnet durch** einen elektronischen Neigungsmesser (34), dessen Meßachse parallel zur optischen Achse (13) des Kollimatorobjektis (12) ausgerichtet ist.

14. Vorrichtung nach einem der vorhergehenden Ansprüche, **gekennzeichnet durch** einen zwei-achsigen elektronischen Neigungsmesser (34), dessen eine Achse parallel zur optischen Achse (13) des Kollimatorobjektivs (12) und dessen andere Achse senkrecht dazu und parallel zu der Ebene ausgerichtet ist, die durch die optischen Achsen (13, 14) des Kollimatorobjektivs (12) und des Empfangsobjektivs (15) gebildet wird.

15. Vorrichtung nach einem der vorhergehenden Ansprüche, **gekennzeichnet durch** einen digital-magnetischen Kompaß (35), dessen Azimut-Referenzrichtung parallel zur optischen Achse (13) des Kollimatorobjektivs (12) ausgerichtet ist.

16. Vorrichtung nach einem der Ansprüchen 13 bis 15, **dadurch gekennzeichnet**, daß die Ausgangssignale des Neigungsmessers (34) und/oder Kompaß (35) der Auswerteeinrichtung (25) als zusätzliche Eingangssignale zugeleitet werden.

17. Vorrichtung nach einem der Ansprüche 13 oder 14, **dadurch gekennzeichnet**, daß die Ausgangssignale des Neigungsmessers (34) einem aktiven optischen oder mechanischen Stellement zur Horizontierung des kollimierten Meßstrahlenbündels (11) zugeleitet werden.

18. Vorrichtung nach einem der vorhergehenden Ansprüche, **gekennzeichnet durch** ein in das austretende Meßstrahlenbündel (11) einfügbares Prisma (40, 41; 43).

## Claims

1. Device for distance measurement with
- a visible measurement ray beam (11) produced by a semiconductor laser (10),
- a collimator objective (12) for the collimation of the measurement ray beam (11) in the direction of the optical axis (13) of the collimator objective (12),
- a circuit arrangement for the modulation of the measurement radiation,
- a receiving objective (15) for the reception and imaging of the measurement ray beam (11), which has been reflected at a distant object (16), onto a receiving equipment,
- a switchable ray-deflecting equipment (28) for the production of an internal reference path between the semiconductor laser (10) and the receiving equipment and
- an electronic evaluating circuit (25) for ascertaining and indicating the distance measured to the object, characterised thereby, that the receiving equipment contains an optical conductor (17') with an opti-electronic transducer (24) connected therebehind, wherein the optical conductor entry surface (17) is arranged in the imaging plane of the receiving objective (15) for great object distances and controlledly displaceable out of this position (18) transversely to the optical axis (14) of the receiving objective (15).

2. Device for distance measurement with
- a visible measurement ray beam (11) produced by a semiconductor laser (10),
- a collimator objective (12) for the collimation of the measurement ray beam (11) in the direction of the optical axis (13) of the collimator objective (12),
- a circuit arrangement for the modulation of the measurement radiation,
- a receiving objective (15) for the reception and imaging of the measurement ray beam (11), which has been reflected at a distant object (16), onto a receiving equipment,
- a switchable ray-deflecting equipment (28) for the production of an internal reference path between the semiconductor laser (10) and the receiving equipment and
- an electronic evaluating circuit (25) for ascertaining and indicating the distance measured to the object, characterised thereby, that the receiving equipment contains an optical conductor (17') with an opti-electronic transducer (24) connected therebehind, wherein the optical conductor entry surface (17) is arranged on the optical axis (14) of the receiving objective (15) in the imaging plane for great object distances and optical means (36; 37; 38), which in the case of shorter object distances deflect the imaging position of the measurement ray beam (11) towards the optical axis (14) of the receiving objective (15), are provided between the receiving objective (15) and the optical conductor entry surface (17) outside the optical axis (14) of the receiving objective (15).

3. Device according to claim 1 or 2, characterised thereby, that the measurement radiation is pulse-modulated by excitation pulses of a pulse width of less than 2 nanoseconds.

4. Device according to claim 1 or 2, characterised thereby, that the optical conductor (17') is curved repeatedly in its course.

5. Device according to claim 1, characterised thereby, that the light entry end (17) of the optical conductor (17') is retained by a mechanical resetting device (18, 19, 21, 22), which is resettable in a plane which is defined by the optical axes (13, 14) of the collimator objective (12) and the receiving objective (15).

6. Device according to claim 5, characterised thereby, that the resetting device is additionally resettable perpendicularly to the plane defined by the optical axes (13, 14).

7. Device according to claim 5 or 6, characterised thereby, that a motorised drive with control equipment is provided and moves the resetting device out of the basic position (18) over the preset resetting range (18'), during which the received light intensity is measured and stored and the resetting device is thereafter brought into a position in which a light intensity is received, which is optimal for the signal evaluation.

8. Device according to claim 7, characterised thereby, that the resetting device consists of a spring hinge (19) with motor-driven eccentric (21, 22).

9. Device according to one of the preceding claims, characterised thereby, that a light-dispersing element (28), the dispersion characteristic (30) of which is matched to the resetting range (18, 18') of the optical conductor entry surface (17), is provided as switchable ray-deflecting equipment for the production of the reference path.

10. Device according to claim 2, characterised thereby, that a reflector (36), which is oriented inclined to the optical axis (14) of the receiving objective (15), is provided for the deflection of the imaging position.

11. Device according to claim 2, characterised thereby, that a refractive optical element (37), which is arranged in rim regions of the receiving objective (15), is provided for the deflection of the imaging position.

12. Device according to claim 2, characterised thereby, that a diffractive optical element (38) is associated with the receiving objective (15) for the deflection of the imaging position.

13. Device according to one of the preceding claims, characterised by an electronic inclinometer (34), the measurement axis of which is oriented parallelly to the optical axis (13) of the collimator objective (12).

14. Device according to one of the preceding claims, characterised by a two-axial electronic inclinometer (34), the one axis of which is oriented parallelly to the optical axis (13) of the collimator objective (12) and the other axis of which is oriented perpendicularly thereto and parallelly to the plane which is formed by the optical axes (13, 14) of the collimator objective (12) and the receiving objective (15).

15. Device according to one of the preceding claims, characterised by a digital magnetic compass (35), the azimuth reference direction of which is oriented parallelly to the optical axis (13) of the collimator objective (12).

16. Device according to one of the claims 13 to 15, characterised thereby, that the output signals of the inclinometer (34) and/or the compass (35) are conducted as additional input signals to the evaluating circuit (25).

17. Device according to one of the claims 13 and 14, characterised thereby, that the output signals of the inclinometer (34) are conducted to an active optical or mechanical setting element for the levelling of the collimated measurement ray beam (11).

18. Device according to one of the preceding claims, characterised by a prism (40, 41; 43) insertable into the issuing measurement ray beam (11).

## Revendications

1. Dispositif de mesure des distances comportant :
- un faisceau de rayons de mesure (11) visible, produit par un laser à semi-conducteur (10),
- un objectif collimateur (12) destiné à collimater le faisceau de rayons de mesure (11) dans la direction de l'axe optique de l'objectif de collimateur (12),
- un circuit conçu pour moduler le rayonnement de mesure,
- un objectif récepteur (15) destiné à capter et à représenter le faisceau de rayons de mesure (11) réfléchi sur un objet (16) éloigné, sur un dispositif récepteur,
- un dispositif de déviation de rayons (28) pouvant être commuté, destiné à produire une distance de référence interne entre le laser à semi-conducteur (10) et le dispositif récepteur, et
- un dispositif d'évaluation électronique (25) destiné à déterminer et à afficher la distance mesurée vis-à-vis de l'objet (16),
caractérisé en ce que le dispositif récepteur contient un guide de lumière (17') avec un convertisseur optoélectronique (24) mis en circuit en aval, la surface d'entrée (17) du guide de lumière étant disposée dans le plan de représentation de l'objectif récepteur (15) pour les grandes distances de l'objet et, à partir de cette position (18), peut être déplaçée en pouvant être commandée, transversalement par rapport à l'axe optique (14) de l'objectif récepteur (15).

2. Dispositif de mesure des distances comportant :
- un faisceau de rayons de mesure (11) visible, produit par un laser à semi-conducteur (10),
- un objectif collimateur (12) destiné à collimater le faisceau de rayons de mesure (11) dans la direction de l'axe optique (13) de l'objectif de collimateur (12),
- un circuit conçu pour moduler le rayonnement de mesure,
- un objectif récepteur (15) destiné à capter et à représenter le faisceau de rayons de mesure (11) réfléchi sur un objet (16) éloigné, sur un dispositif récepteur,
- un dispositif de déviation de rayons (28) pouvant être commuté, destiné à produire une distance de référence interne entre le laser à semi-conducteur (10) et le dispositif récepteur, et
- un dispositif d'évaluation électronique (25) destiné à déterminer et à afficher la distance mesurée vis-à-vis de l'objet (16),
caractérisé en ce que le dispositif récepteur contient un guide de lumière (17') avec un convertisseur optoélectronique (24) mis en circuit en aval, la surface d'entrée (17) du guide de lumière étant disposée sur l'axe optique (14) de l'objectif récepteur (15) dans le plan de représentation pour les grandes distances de l'objet et, entre l'objectif récepteur (15) et la surface d'entrée (17) du guide de lumière, étant prévus, hors de l'axe optique (14) de l'objectif récepteur (15), des moyens optiques (36; 37; 38) qui, lorsque les distances vis-à-vis de l'objet sont plus courtes, dévient la position de représentation du faisceau de rayonnement de mesure (11) par rapport à l'axe optique (14) de l'objectif récepteur (15).

3. Dispositif selon la revendication 1 ou 2, caractérisé en ce que le rayonnement de mesure est l'objet d'une modulation par impulsions et avec des impulsions d'excitation ayant une largeur d'impulsion inférieure à deux nanosecondes.

4. Dispositif selon la revendication 1 ou 2, caractérisé en ce que le guide de lumière (17') a une allure plusieurs fois incurvée (23).

5. Dispositif selon la revendication 1, caractérisé en ce que l'extrémité d'entrée (17) de la lumière du guide de lumière (17') est supportée par un dispositif de réglage mécanique (18, 19, 21, 22), réglable dans un plan défini par les axes optiques (13, 14) de l'objectif de collimateur (12) et de l'objectif récepteur (15).

6. Dispositif selon la revendication 5, caractérisé en ce que le dispositif de réglage est en plus réglable perpendiculairement par rapport au plan défini par les axes optiques (13, 14).

7. Dispositif selon les revendications 5 ou 6, caractérisé en ce qu'est prévu un entraînement motorisé avec un dispositif de commande, qui déplace le dispositif de réglage hors de la position de base (18) sur la zone de réglage (18') prédéterminée, l'intensité lumineuse captée étant mesurée et mémorisée, puis le dispositif de réglage étant placé en une position dans laquelle est captée une intensité optimale de la lumière pour l'évaluation du signal.

8. Dispositif selon la revendication 7, caractérisé en ce que le dispositif de réglage est constitué d'une articulation élastique (19) équipée d'excentrique (21, 22) à entraînement motorisé.

9. Dispositif selon l'une des revendications précédentes, caractérisé en ce qu'est prévu comme dispositif commutable de déviation des rayons, pour produire la distance de référence, un élément photo-dispersant (28), dont la caractéristique de dispersion (30) est adaptée à la plage de réglage (18, 18') de la surface d'entrée (17) du guide de lumière.

10. Dispositif selon la revendication 2, caractérisé en ce que, pour dévier la position de représentation, est prévu un réflecteur (36) orienté obliquement par rapport à l'axe optique (14) de l'objectif récepteur (15).

11. Dispositif selon la revendication 2, caractérisé en ce que, pour effectuer la déviation de la position de représentation, est prévu un élément optique (37) disposé dans les zones marginales de l'objectif récepteur (15).

12. Dispositif selon la revendication 2, caractérisé en ce que, pour assurer la déviation de la position de représentation, est associé à l'objectif récepteur (15) un élément (38) à caractéristique optique diffractante.

13. Dispositif selon l'une des revendications précédentes, caractérisé par un capteur d'inclinaison (34) électronique, dont l'axe de mesure est parallèle à l'axe optique (13) de l'objectif de collimateur (12).

14. Dispositif selon l'une des revendications précédentes, caractérisé par un capteur d'inclinaison électronique (34) à deux axes, dont un axe est parallèle à l'axe optique (13) de l'objectif de collimateur (12) et dont l'autre axe lui est perpendiculaire et parallèle au plan qui est constitué par les axes optiques (13, 14) de l'objectif de collimateur (12) et de l'objectif récepteur (15).

15. Dispositif selon l'une des revendications précédentes, caractérisé par un compas magnéto-numérique (35), dont la direction de référence en azimut est parallèle à l'axe optique (13) de l'objectif de collimateur (12).

16. Dispositif selon l'une des revendications 13 à 15, caractérisé en ce que les signaux de sortie du capteur d'inclinaison (34) et/ou du compas (35) sont amenés au dispositif d'évaluation (25) à titre de signaux d'entrée supplémentaires.

17. Dispositif selon l'une des revendications 13 ou 14, caractérisé en ce que les signaux de sortie du capteur d'inclinaison (34) sont amenés à un élément de réglage actif optique ou mécanique destiné à définir la mise à l'horizontale du faisceau de rayonnement de mesure (11) collimaté.

18. Dispositif selon l'une des revendications précédentes, caractérisé par un prisme (40, 41; 43), pouvant être inséré dans le faisceau de rayons de mesure (11) sortant.
